# DEMANDE DE BREVET EUROPEEN

(11) **EP 2 202 116 A1**
(43) Date de publication de la demande: **30.06.2010**
(21) Numéro de dépôt: 09306175.2
(22) Date de dépôt: 03.12.2009
(51) Int. Cl.: B60R 7/08, B60R 7/06

(54) **Equipement intérieur d'un véhicule automobile comprenant une planche de bord, une boîte à gants et un dispositif distributeur de mouchoirs en papier, et véhicule ainsi équipé**

(30) Priorité: 23.12.2008 FR 0807389
(71) Demandeur: Renault s.a.s., 92100 Boulogne-Billancourt (FR)
(72) Inventeur: Chheang, Nakry, 78470, Saint Rémy Les Chevreuses (FR); Gourdon, Stéphane, 75015 Paris (FR); Previdi, Stephane, 91360 Villemoisson Sur Orge (FR)

(57) **Abrégé**

L'invention concerne un équipement intérieur d'un véhicule automobile comprenant une planche de bord (15), une boite à gants (11) disposée sous cette planche de bord (15) et un dispositif distributeur de mouchoirs en papier (3), caractérisé en ce qu'il comporte au moins un élément support (23) d'un ensemble de mouchoirs en papier (3), monté par une ouverture (7) de la face supérieure (9) de la boîte à gant (11) dans la planche de bord (15), ledit élément support (23) comportant en outre une ouverture (29) disposée sensiblement au niveau de la face supérieure (9) de la boîte à gants (11), par laquelle les mouchoirs en papier (3) peuvent être extraits dudit ensemble de mouchoirs en papier (3).

## Description

L'invention concerne un équipement intérieur d'un véhicule automobile comprenant une planche de bord, une boite à gants et un dispositif distributeur de mouchoirs en papier, et le véhicule comprenant un tel équipement.

On connaît par EP1 681 205, FR2 819 765 et JP4 016 086 des dispositifs de distribution de mouchoirs en papier dans la boîte à gants d'un véhicule automobile. Ces dispositifs prévoient la distribution de mouchoirs par un élément de boîtier disposé dans la partie supérieure de la boîte à gants ou solidaire du portillon de la boîte à gants. Ces dispositifs présentent l'inconvénient de prendre du volume dans la boîte à gants au détriment du volume utile de rangement dans la boîte à gants.

L'invention vise à pallier ces inconvénients et propose un équipement intérieur d'un véhicule automobile comprenant une planche de bord, une boite à gants disposée sous cette planche de bord et un dispositif distributeur de mouchoirs en papier, caractérisé en ce qu'il comporte au moins un élément support apte à recevoir un ensemble de mouchoirs en papier, monté par une ouverture de la face supérieure de la boîte à gants dans la planche de bord, ledit élément support comportant en outre une ouverture disposée sensiblement au niveau de la face supérieure de la boîte à gants, par laquelle les mouchoirs en papier peuvent être extraits dudit ensemble de mouchoirs en papier.
Ainsi le dispositif de distribution de mouchoirs en papier n'encombre pas le volume disponible dans la boite à gants.

L'ouverture de l'élément support peut être agencée en sorte d'être en regard d'une ouverture d'extraction des mouchoirs d'une boîte de distribution de mouchoirs lorsqu'elle est en position sur l'élément support.

Ledit ensemble de mouchoirs en papier est avantageusement une boîte cartonnée classique de distribution de mouchoirs un à un comportant une ouverture d'extraction des mouchoirs sur sa face supérieure, ladite boîte étant montée retournée sur l'élément support avec son ouverture d'extraction disposée en regard de celle de l'élément support et orientée par conséquent vers le bas au niveau de la face supérieure de la boîte à gants.

Cette ouverture d'extraction des mouchoirs de l'élément support est avantageusement disposée à proximité de l'ouverture du portillon de la boîte à gants, ce qui facilite l'extraction des mouchoirs à l'ouverture de celui-ci.

Il résulte de cette disposition que l'ensemble de mouchoirs sur l'élément support n'occupe aucun volume supplémentaire dans la boîte à gants et donc que le volume de cette dernière reste entièrement disponible. De plus, les mouchoirs en papier sont faciles à extraire, ils sont protégés de la poussière et leur rangement est discret.

Ledit élément support peut être un cadre ou un boîtier pourvu d'une ouverture inférieure apte à permettre la distribution des mouchoirs papier et d'une ouverture supérieure par laquelle la boîte de mouchoirs peut être introduite et fixée à l'élément support, ledit élément support étant fixé à l'aide d'au moins un moyen de fixation, de préférence rapide, dans ladite ouverture de la face supérieure de la boîte à gants ou dans une enceinte de la planche de bord.

Ledit moyen de fixation peut consister en un ensemble d'éléments clips solidaires de l'élément support et aptes à s'engager dans des éléments de prise correspondants de l'ouverture de la face supérieure de la boîte à gants.

Ces éléments clips peuvent s'encliqueter élastiquement en prise chacun sur un dit élément de prise, lesdits éléments clips étant pourvus d'une sangle élastique montée sur chacun d'eux et apte à venir en application élastique sur le dessus de la boîte pour la maintenir en pression sur l'élément support solidairement à celui-ci. Cette sangle est avantageusement pourvue d'un dispositif de réglage de sa longueur, pour l'adapter aux diverses tailles des boîtes de mouchoirs papier.

L'invention concerne également un procédé d'extraction d'un mouchoir papier au sein d'une boîte à gants d'un véhicule tel que défini précédemment, caractérisé en ce qu'il consiste à ouvrir le portillon de la boîte à gants, saisir et extraire un mouchoir papier en saillie inférieure de l'ouverture de l'élément support de l'ensemble de mouchoirs papier, sur la face supérieure de la boîte à gants, et refermer le portillon de la boîte à gants après l'extraction du mouchoir.

L'invention est décrite ci-après à l'aide d'un exemple de réalisation non limitatif et en référence aux dessins annexés, sur lesquels :
- la figure 1 est une vue en coupe transversale schématique d'un équipement intérieur d'un véhicule automobile selon l'invention, et
- la figure 2 montre en perspective un élément support d'une boîte de mouchoirs en papier et l'ouverture de montage correspondante dans la boîte à gants du véhicule.

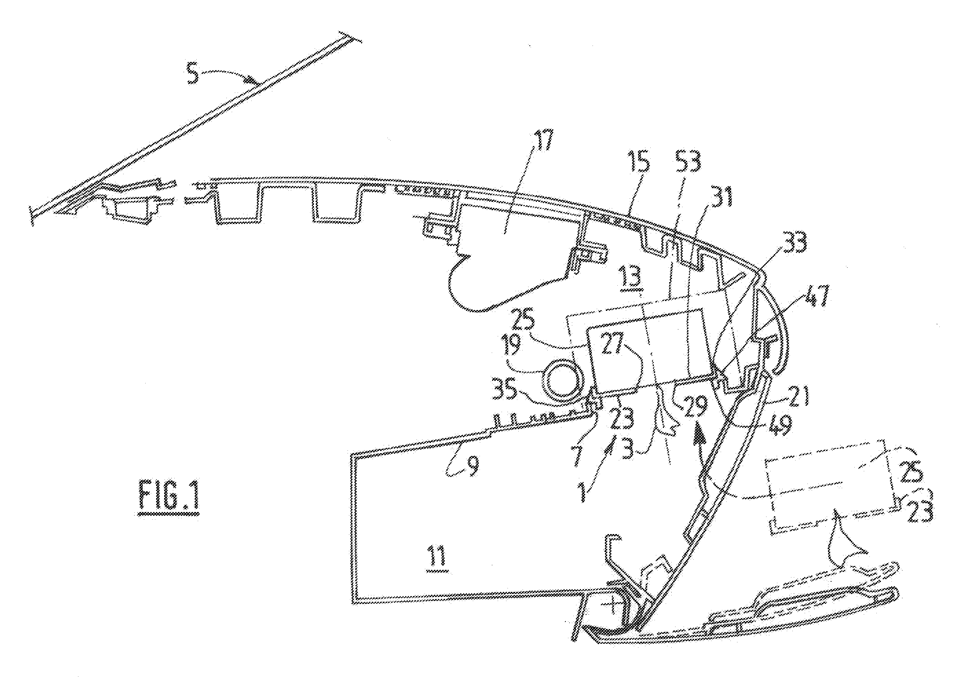

Avec référence aux dessins, et en particulier à la figure 1, le dispositif de distribution 1 de mouchoirs en papier 3 pour véhicule automobile 5 selon l'invention est monté dans une ouverture 7 de la face supérieure 9 de la boîte à gants 11 du véhicule dans un espace libre 13 de la planche de bord 15 du véhicule, par exemple entre le module de coussin gonflable ou « d'airbag » 17 et une traverse longitudinale rigide 19 de la planche de bord 15. Cet espace 13 est formé à proximité du portillon 21 de la boite à gants.

Ce dispositif 1 est monté dans la planche de bord 15 du véhicule, en regard du siège passager (non représenté) à côté du siège conducteur. Il comporte un cadre support 23 apte à recevoir une boîte 25 de mouchoirs papier 3 classique, laquelle est tournée avec son ouverture 27 d'extraction des mouchoirs papier 3 vers le bas, dans une ouverture complémentaire centrée 29 du cadre support 23.

Ce cadre support 23 est issu de moulage en matière plastique. Il comporte un corps 31 relativement plan rectangulaire pourvu de ladite ouverture 29, laquelle est de préférence elliptique correspondant à celle 27 de la boîte de mouchoirs papier 25, et quatre côtés 33 de faible hauteur bordant ledit corps 31. Ces côtés 33 reçoivent à faible jeu la partie inférieure de la boîte de mouchoirs papier 25, laquelle est montée solidairement au cadre support 23. Ce cadre support 23 avec la boîte de mouchoirs en papier 25 est destiné à être monté à faible jeu dans l'ouverture rectangulaire complémentaire 7 de la face supérieure 9 de la boîte à gants 11, fixée à celle-ci au moyen d'éléments clips 35 engagés dans des évidements complémentaires 37 de l'ouverture 7.

Ces éléments clips 35 issus de moulage en une seule pièce avec le cadre support 23 sont disposés au nombre de quatre, chacun à proximité d'un angle des côtés du cadre support 23. Ils reçoivent chacun une sangle élastique 39 montée traversante à leur extrémité supérieure, passée intérieurement le long des côtés longitudinaux 33 du cadre et dont les brins externes 41 latéraux sont destinés à être appliqués sur le dessus de la boîte 25, de façon élastique, éventuellement avec une boucle de réglage de longueur 43, pour disposer la boîte de mouchoirs papier 25 en pression contre le cadre support 23 et solidairement à celui-ci. La sangle 39 est donc entrelacée sur le support 23 et est imperdable. Elle peut également être mise dans des encoches 45 du cadre support 23 quand il n'y a pas de boîte à sangler.

Les crochets 47 des clips 35 sont élastiquement en rappel extérieur, et donc aptes à s'engager par simple enfoncement du cadre support 23 dans les évidements correspondants 37 de l'ouverture 7 de la boîte à gants. Inversement, le dégagement des crochets 47 est obtenu par pression manuelle vers l'intérieur des pattes inférieures 49 des éléments clips 35.

Le cadre comporte également un rebord horizontal 51 formé en saillie des côtés 33 et qui peut s'appliquer en butée sur le bord de l'ouverture 7 de la boîte à gants au montage, au moins en certains points (non représenté).

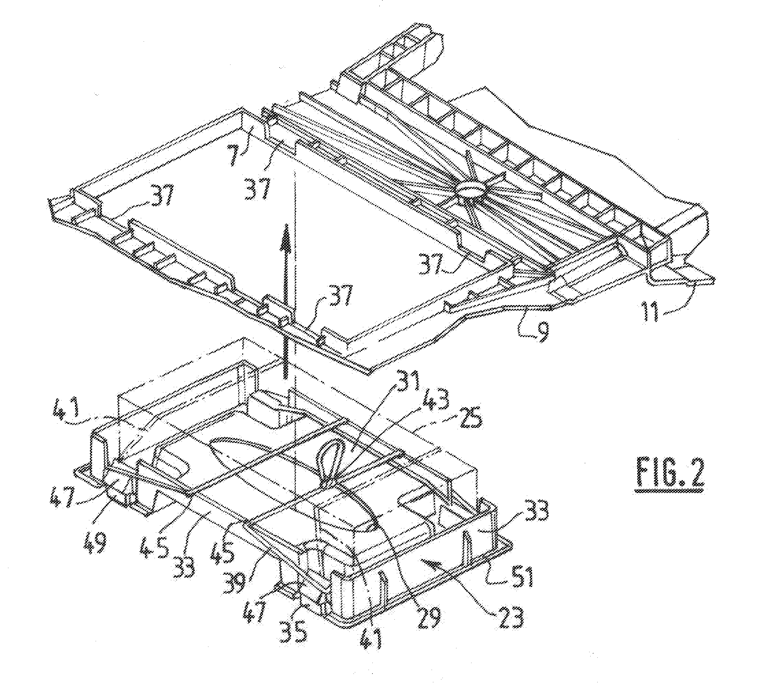

Pour monter le dispositif de distribution de mouchoirs, on procède comme suit :.
On monte d'abord la boîte de mouchoirs 25 (en trait mixte sur la figure 2) (pleine) dans le cadre support 23, préalablement déposé de la boîte à gants 11. La sangle 39 est passée sur le dessus de la boîte 25 en application élastique à chacune de ses extrémités, l'ouverture d'extraction 27 étant posée sur celle 29 du cadre support. Eventuellement, un mouchoir papier 3 peut être extrait de chacune des ouvertures 27, 29 de la boîte de papier 25 et du cadre support 23, pour permettre l'extraction consécutive des autres mouchoirs en papier 3 un à un, cette opération étant plus commode sur l'ensemble isolé cadre support 23 et boîte de mouchoirs en papier 25.

On introduit ensuite (selon flèche) l'ensemble cadre support 23 et boîte de mouchoirs en papier 25 dans l'ouverture 7 de la face supérieure 9 de la boîte à gants 11. Lorsque les rebords 51 du cadre support 23 sont arrivés en contact de la face supérieure 9, les crochets 47 des éléments clips 35 viennent en prise automatique dans les évidements correspondants 37 de prise de l'ouverture. L'ensemble cadre support 23 et boîte de mouchoirs papier 25 est alors monté, un mouchoir papier 3 étant en légère saillie de la face inférieure de la boîte à gants 11, prêt à être extrait.

Lorsque la boîte de mouchoirs 25 est vide, il est nécessaire de déposer l'ensemble cadre support 23 et boîte de mouchoirs vide 25 de la boîte à gants 11. Pour cela, on appuie manuellement sur les pattes inférieures 49 des éléments clips 35, vers l'intérieur, de manière à dégager les crochets 47 des évidements de prise correspondants 37, puis l'ensemble 23, 25 vient vers le bas par son propre poids. La sangle 39 est dégagée du dessus de la boîte vide 25, celle-ci est libérée et une nouvelle boîte de mouchoirs papier pleine 25 peut alors être montée sur le cadre support 23. L'ensemble cadre support 23 et boîte de mouchoirs papier pleine 25 peut alors être monté dans la boîte à gants 11 comme décrit précédemment.

Naturellement, des variantes de réalisation peuvent être apportées dans le cadre de l'invention.

Ainsi, le cadre support 23 avec sa boîte de mouchoirs 25 peut être fixé selon un autre moyen de fixation à l'ouverture 7 de la face supérieure 9 de la boîte à gants 11. Il pourrait être articulé suivant un côté à celle-ci (non représenté), dégageant suffisamment la boîte de mouchoirs 25, au déverrouillage, pour permettre le montage ou démontage de celle-ci sur le cadre support.

De plus, la fixation de l'élément support 23 et de sa boîte de mouchoirs 25 peut encore être réalisée dans une enceinte spécifique 53 (en trait mixte sur la figure 1) formée dans la planche de bord 15, par un ensemble de crochets à prise sur le cadre support par la manoeuvre d'une tirette (non représenté) en bordure de l'ouverture 7 de la face supérieure de la boîte à gants.

Par ailleurs, la boîte de mouchoirs 25 peut encore être fixée à l'élément support 23 au moyen de taquets (non représenté) articulés à celui-ci et en rappel élastique sur le dessus de la boîte.

L'invention apporte ainsi un moyen simple et économique de distribution de mouchoirs en papier dans un véhicule automobile qui n'encombre pas le volume disponible à l'intérieur de la boite à gants.

## Revendications

1. Equipement intérieur d'un véhicule automobile comprenant une planche de bord (15), une boite à gants (11) disposée sous cette planche de bord (15) et un dispositif distributeur de mouchoirs en papier (3), **caractérisé en ce qu'**il comporte au moins un élément support (23) apte à recevoir un ensemble de mouchoirs en papier (3), monté par une ouverture (7) de la face supérieure (9) de la boîte à gant (11) dans la planche de bord (15), ledit élément support (23) comportant en outre une ouverture (29) disposée sensiblement au niveau de la face supérieure (9) de la boîte à gants (11), par laquelle les mouchoirs en papier (3) peuvent être extraits dudit ensemble de mouchoirs en papier (3).

2. Equipement intérieur d'un véhicule automobile selon la revendication 1, **caractérisé en ce que** l'ouverture (29) de l'élément support (23) est agencée en sorte d'être en regard d'une ouverture d'extraction (27) des mouchoirs d'une boîte de distribution de mouchoirs (3) lorsqu'elle est en position sur l'élément support (23).

3. Equipement intérieur d'un véhicule automobile selon l'une des revendications 1 ou 2, **caractérisé en ce que** l'ouverture (29) d'extraction des mouchoirs (3) de l'élément support (23) est disposée à proximité de l'ouverture du portillon (21) de la boîte à gants (11).

4. Equipement intérieur d'un véhicule automobile selon l'une quelconque des revendications précédentes, **caractérisé en ce que** ledit élément support (23) est un cadre ou un boîtier pourvu d'une ouverture inférieure (29) apte à permettre la distribution des mouchoirs en papier (3) et d'une ouverture supérieure par laquelle la boîte de mouchoirs (25) peut être introduite et fixée à l'élément support (23).

5. Equipement intérieur d'un véhicule automobile selon l'une quelconque des revendications précédentes, **caractérisé en ce que** ledit élément support (23) est fixé à l'aide d'au moins un moyen de fixation (35) dans l'ouverture (7) de la face supérieure (9) de la boîte à gants (11).

6. Equipement intérieur d'un véhicule automobile selon l'une des revendications 1 à 4, **caractérisé en ce que** ledit élément support (23) est fixé à l'aide d'au moins un moyen de fixation dans une enceinte (53) de la planche de bord (15).

7. Equipement intérieur d'un véhicule automobile selon la revendication 5, **caractérisé en ce que** ledit moyen de fixation (35) consiste en un ensemble d'éléments clips (35) solidaires de l'élément support (23) et aptes à s'engager dans des éléments de prise correspondants (37) de l'ouverture (7) de la face supérieure (9) de la boîte à gants (11).

8. Equipement intérieur d'un véhicule automobile selon la revendication 7, **caractérisé en ce que** les éléments clips (35) sont rappelés élastiquement en prise chacun sur un dit élément de prise complémentaire (37) lesdits éléments clips (35) étant pourvus d'une sangle élastique (39) montée sur chacun d'eux et apte à venir en application élastique sur le dessus de la boîte (25) pour la maintenir en pression sur l'élément support (23) solidairement à celui-ci.

9. Equipement intérieur d'un véhicule automobile selon la revendication 8, **caractérisé en ce que** la sangle (39) est pourvue d'un dispositif de réglage (43) de sa longueur, pour l'adapter aux diverses tailles des boîtes (25) de mouchoirs papier.

10. Véhicule automobile comprenant un équipement intérieur selon l'une quelconque des revendications 1à 9.
